# EUROPÄISCHE PATENTSCHRIFT

(11) **EP 3 481 328 B1**
(45) Veröffentlichungstag und Bekanntmachung des Hinweises auf die Patenterteilung: **01.09.2021**
(21) Anmeldenummer: 17761081.3
(22) Anmeldetag: 01.09.2017
(51) Int. Cl.: A61C 13/00, A61C 8/00, A61C 13/083, A61C 13/09

(54) **MEHRFARBIGER FRÄSROHLING FÜR IMPLANTAT-GETRAGENE DENTALE, PROTHETISCHE VERSORGUNGEN, HERSTELLUNGSVERFAHREN UND VERWENDUNG**
MULTI-COLORED MILLING BLANK FOR PROSTHETIC DENTAL FIXTURES WHICH ARE SUPPORTED ON AN IMPLANT, METHOD OF MANUFACTURING AND USE
ÉBAUCHE POLYCHROME POUR FRAISAGE DESTINÉE À DES RESTAURATIONS PROTHÉTIQUES DENTAIRES SUPPORTÉES PAR IMPLANT, PROCÉDÉ DE FABRICATION ET D'UTILISATION

(30) Priorität: 05.09.2016 DE 102016116546
(43) Veröffentlichungstag der Anmeldung: 15.05.2019
(73) Patentinhaber: Kulzer GmbH, 63450 Hanau (DE)
(72) Erfinder: BÖHM, Uwe, 61350 Bad Homburg (DE); BEYER, Mario, 61350 Bad Homburg (DE)
(74) Vertreter: Bendele, Tanja
(86) Internationale Anmeldenummer: PCT/EP2017/071974
(87) Internationale Veröffentlichungsnummer: WO 2018/042001

(56) Entgegenhaltungen:
- WO-A2-2010/032987
- US-A- 5 104 318
- US-A1- 2008 274 440

## Beschreibung

Gegenstand der Erfindung ist ein dentaler Rohling zur Herstellung einer dentalen, prothetischen Versorgung, insbesondere einer mehrfarbigen dentalen prothetischen Versorgung, durch eine den äußeren Bereich des Rohlings abtragenden Bearbeitung, umfassend (i) ein inneres Verbindungsteil, das in Richtung des koronalen Bereiches des dentalen Rohlings einen vorzugsweise zapfenförmigen Gerüstbereich und in radikulärer Richtung des dentalen Rohlings eine Implantat-Anschlussgeometrie aufweist, (ii) wobei der Gerüstbereich des Verbindungsteils in Richtung des koronalen Bereiches des Rohlings mit einem Dentingerüstbereich verbunden ist, und wobei (iii) der Dentingerüstbereich in Richtung des koronalen Bereiches des Rohlings mit einem (iv) äußeren Bereich des Rohlings im Bereich des Zahnschmelzes verbunden ist, und wobei (v) der dentale Rohling innen ein längliches Lumen zur Befestigung der hergestellten dentalen, prothetischen Versorgung mit einer Verbindungsschraube oder einem Bolzen auf einem Implantat oder Abutment aufweist. Ferner ist Gegenstand der Erfindung ein System zur Herstellung eines dentalen Rohlings sowie das Verfahren zur Herstellung des Rohlings.

Zur Herstellung dentaler, prothetischer Implantat oder Zahnstumpf getragener Versorgungen ist es bekannt, Brücken, Kronenkappen oder dentale Gerüststrukturen, die anschließend mit einer zahnfarbenen Verblendung versehen werden, aus Fräsrohlingen in einem abtragenden Verfahren herzustellen. Bislang werden die in einem abtragenden Verfahren hergestellten dentalen, prothetischen Versorgungen aus Monoblöcken mit einer in die Fräsmaschine einspannbaren Halterung für die Fräsmaschine oder aus Fräsronden, d.h. aus zylindrischen Platten, hergestellt. Aus den Fräsronden wird in der Regel eine Vielzahl an prothetischen Versorgungen hergestellt. Die abtragende Bearbeitung dieser Fräsronden erfolgt in der Regel zentralisiert in einem Fräszentrum, das über entsprechende CAD/CAM-Geräte verfügt. CAD/CAM-Verfahren sind computergestützte Herstellverfahren von bspw. ästhetischen prothetischen dentalen, Versorgungen, wie Brücken und Kronen. Dabei bedeutet in CAD/CAM die englische Abkürzung CAD Computer Aided Design und CAM für Computer Aided Manufacturing.

So werden in automatisierten, materialabtragenden Verfahren, nachfolgend auch nur als abtragende Verfahren bezeichnet, 3D-Werkstücke aus den CAD-Daten in einem CAM-Verfahren hergestellt. Übliche abtragende Verfahren umfassen Fräsen, Bohren, Schneiden, Abplatzen, Polieren, Schmelzen und/oder mindestens zwei der abtragenden Verfahrensschritte. Neben den bekannten CAD/CAM-Verfahren kann zukünftig auch das sogenannte Lasermilling, einer mittels Laserstrahlen bewirkten Materialabtragung, zur Bearbeitung von Rohlingen zur Herstellung von prothetischen, dentalen Versorgungen verwendet werden. Um die gewünschten Resultate zu erhalten, sind die Materialeigenschaften der Rohlinge spezifisch an den Lasermilling-Prozess anzupassen.

Eine Aufgabe der Erfindung bestand darin, eine dezentrale Herstellung von dentalen, prothetischen Versorgungen zu ermöglichen, die vorzugsweise zugleich ästhetisch sehr gut einem natürlichen Zahn entsprechen. Vorzugsweise soll die materialabtragende Bearbeitung eines Fräsrohlings in einem deutlich wirtschaftlicheren Verfahren ermöglicht werden, in dem die Herstellung, Bearbeitung und Anpassung der dentalen, prothetischen Versorgung vorzugsweise direkt innerhalb eines Behandlungstermins erfolgen kann. Insbesondere sollen die Bearbeitungseigenschaften des Rohlings in Bezug auf die Bruchfestigkeit und/oder den E-Modul sehr gut sein.

Gelöst werden die Aufgaben der Erfindung durch den erfindungsgemäßen dentalen Rohling, insbesondere dentalen Fräsrohling, nach Anspruch 1, insbesondere einem Rohling mit einem äußeren Bereich aus einer Polymer gefüllten Hybridkeramik, sowie durch das Verfahren zur Herstellung des Rohlings nach Anspruch 10 als auch das System zur Herstellung eines Rohlings nach Anspruch 13. Bevorzugte Ausführungsformen des Rohlings werden in den Unteransprüchen und detaillierter in der Beschreibung dargestellt.

So zeigt der erfindungsgemäße Rohling mit einem äußeren Bereich aus einer Hybridkeramik deutlich verbesserte Materialeigenschaften gegenüber ungefüllten rein keramischen Fräsrohlingen, die in CAD/CAM-Verfahren zur Rohlingen von prothetischen Formteilen gefräst werden können.

Ein solches keramisches prothetisches Formteil aus dem Stand der Technik wird beispielsweise in der US2008274440A1 offenbart, wo ein dentalen Implantatabutment als einteilige Einheitsstruktur aus einem keramischen Material hergestellt wird, welches durchgehend mehrfarbig ist, um der Farbe der umgehenden Zähne sowie des umgebenden Zahnfleisches im Mundraum zu entsprechenden.

Gegenstand der Erfindung ist somit ein dentaler Rohling, insbesondere ein Fräsrohling, zur Herstellung einer dentalen, prothetischen Versorgung, wie einer Implantat und optional Abutment getragenen Einzelzahnversorgung, bspw. einer Krone, vorzugsweise einer mehrfarbigen dentalen, prothetischen Versorgung, durch eine materialabtragende Bearbeitung des Rohlings, insbesondere des äußeren Bereiches des Rohlings, umfassend
(i) ein inneres Verbindungsteil, das in Richtung des koronalen Bereiches des dentalen Rohlings einen Gerüstbereich, insbesondere einen zapfenförmigen, vorzugsweise werkstoffeinstückigen Gerüstbereich, aufweist und in radikulärer Richtung des dentalen Rohlings eine Implantat-Anschlussgeometrie aufweist, insbesondere ist das Verbindungsteil aus einem Metall oder einer Metalllegierung, bevorzugt aus Titan, einer Titanlegierung, Gold, einer Goldlegierung oder aus Kobalt-Chrom,
(ii) wobei der Gerüstbereich des Verbindungsteils in Richtung des koronalen Bereiches des Rohlings mit einem Dentingerüstbereich verbunden ist, und wobei
(iii) der Dentingerüstbereich in Richtung des koronalen Bereiches des Rohlings mit einem
(iv) äußeren Bereich des Rohlings aus einer Hybridkeramik verbunden ist, und
(v) der dentale Rohling innen in der Implantat-Anschlussgeometrie im inneren Verbindungsteil und optional im Gerüstbereich des inneren Verbindungsteils ein längliches Lumen aufweist, das von der Oberseite bis zur Unterseite der Implantat-Anschlussgeometrie des inneren Verbindungsteils und optional von der Oberseite bis zur Unterseite des Gerüstbereiches des inneren Verbindungsteils reicht, und wobei das Lumen eine Öffnung in krestaler oder lingualer Richtung und eine Öffnung in radikulärer Richtung aufweist.

Nach einer Alternative ist das Lumen zur Aufnahme einer Verbindungsschraube im Wesentlichen zylindrisch oder als ein längliches Lumen mit einem bogenförmigen Verlauf und optional mit Gewindeabschnitten in radikulärer Richtung ausgebildet. Unter einem bogenförmigen Verlauf des Lumens wird ein Lumen verstanden, das mehr als eine Längsmittelachse aufweist. Beispielsweise kann das Lumen bereichsweise Längsmittelachsen aufweisen, wobei diese Längsmittelachsen zueinander in einem Winkel ungleich 0° bzw. ungleich 180° stehen.

Der äußere Bereich des Rohlings entspricht dem Bereich des Schmelzes eines natürlichen Zahns. Das innere Verbindungsteil ist vorzugsweise im zervikalen Bereich der dentalen prothetischen Versorgung angeordnet und vorzugsweise zapfenförmig ausgebildet. Nach einer weiteren bevorzugte Alternative ist das innere Verbindungsteil werkstoffeinstückig ausgebildet.

Der Gerüstbereich kann lösbar oder nicht lösbar mit dem Dentingerüstbereich verbunden sein. So kann die Verbindung zwischen dem Gerüstbereich und dem Dentinbereich formschlüssig, kraftschlüssig oder auch stoffschlüssig erfolgen oder eine Kombination davon umfassen. Ebenso kann der Dentingerüstbereich lösbar oder nicht lösbar mit dem äußeren Bereich verbunden sein. So kann auch hier die Verbindung zwischen dem Dentingerüstbereich und dem äußeren Bereich formschlüssig, kraftschlüssig oder auch stoffschlüssig erfolgen oder eine Kombination davon umfassen.

Gegenstand der Erfindung ist ebenso ein Rohling, insbesondere Fräsrohling, wobei der dentale Rohling ein längliches Lumen aufweist, das von der Oberseite des äußeren Bereiches bis zur Unterseite der Implantat-Anschlussgeometrie des inneren Verbindungsteils reicht, und wobei das Lumen durch das innere Verbindungsteil umfassend die Anschlussgeometrie und den Gerüstteil, den Dentingerüstbereich und den äußeren Bereich reicht und eine Öffnung in krestaler oder lingualer Richtung und eine Öffnung in radikulärer Richtung aufweist.

Ferner kann der dentale Rohling ein längliches Lumen aufweisen, das von der Oberseite des äußeren Bereiches bis zur Unterseite der Implantat-Anschlussgeometrie des Verbindungsteils reicht, wobei das Lumen durch das innere Verbindungsteil, den Dentingerüstbereich und den äußeren Bereich reicht und eine Öffnung in krestaler oder lingualer Richtung und eine Öffnung in radikulärer Richtung aufweist und der äußere Bereich den Dentingerüstbereich zervikal oder im zervikalen Bereiche umhüllt. Ferner ist es bevorzugt, wenn der Dentingerüstbereich den Gerüstbereich zervikal oder im zervikalen Bereich umhüllt.

Gegenstand der Erfindung kann somit auch ein Rohling mit einem länglichen Lumen sein, das von der Oberseite bis zur Unterseite des äußeren Bereiches, von der Oberseite bis zur Unterseite des Dentingerüstbereiches und von der Oberseite bis zur Unterseite des Verbindungsteils reicht, so dass das Lumen durch das innere Verbindungsteil, den Dentingerüstbereich und den äußeren Bereich reicht und eine Öffnung in krestaler oder lingualer Richtung auf der Oberseite des äußeren Bereiches und eine Öffnung in radikulärer Richtung auf der Unterseite der Implantat-Anschlussgeometrie aufweist.

Nach einer bevorzugten Alternative ist Gegenstand der Erfindung ein dentaler Rohling, der ein längliches Lumen aufweist, das von der Oberseite des äußeren Bereiches bis zur Unterseite der Implantat-Anschlussgeometrie des Verbindungsteils reicht, insbesondere reicht das Lumen durch das gesamte innere Verbindungsteil, den Dentingerüstbereich und den äußeren Bereich und weist eine Öffnung in krestaler oder lingualer Richtung und eine Öffnung in radikulärer Richtung auf, wobei das längliche Lumen
(a) mindestens eine Längsachse aufweisen kann, insbesondere kann (a.1) das längliche Lumen rotationssymmetrisch zu seiner einen Längsachse ausgebildet sein und/oder (a.2) das längliche Lumen kann bereichsweise Längsmittelachsen aufweisen und das Lumen kann vorzugsweise bogenförmig, bspw. mit sich nicht veränderndem Durchmesser, ausgebildet sein, und/oder
(b) das längliche Lumen kann abgewinkelt sein und mindestens zwei sich schneidende Längsachsen aufweisen, und/oder (c) das längliche Lumen kann bogenförmig, bspw. mit sich veränderndem Durchmesser, ausgebildet sein und/oder (d) die Öffnung des länglichen Lumens kann in krestaler oder lingualer Richtung, insbesondere an der Oberseite des äußeren Bereiches, der Oberseite des Dentingerüstbereiches und/oder der Oberseite des Gerüstbereiches, mindestens einen größeren Durchmesser aufweisen als die Öffnung, insbesondere an der Unterseite der Implantat-Anschlussgeometrie des inneren Verbindungsteils, in radikulärer Richtung.

Das Lumen weist einen Durchmesser auf, der zur Aufnahme einer Verbindungsschraube oder eines Bolzens zur Befestigung der prothetischen Versorgung auf einem Implantat geeignet ist. Optional kann das Lumen zusätzlich einen Gewindeabschnitt aufweisen.

Ebenso ist Gegenstand der Erfindung ein Rohling mit (i) einem inneren Verbindungsteil, das den Gerüstbereich und die Implantat-Anschlussgeometrie umfasst, wobei das Verbindungsteil aus mindestens einem Metall oder einer Metalllegierung ist, bevorzugt ist das innere Verbindungsteil aus Titan, einer Titanlegierung, Gold, einer Goldlegierung oder aus einer Kobalt-Chrom-Legierung. Besonders bevorzugt ist das Verbindungsteil aus einer Titan-, Gold- oder Kobalt-Chrom-Legierung. Das Verbindungsteil ist vorzugsweise werkstoffeinstückig aus einem Metall oder einer Metalllegierung.

Ferner ist es bevorzugt, wenn der Rohling im (iii) Dentingerüstbereich aus einem Metalloxid oder Metalloxidgemisch gebildet ist, das optional einen Gehalt an Magnesiumoxid (MgO) und/oder Ytterbiumoxid (Y₂O₃) aufweist. Vorzugsweise kann der Rohling im (iii) Dentingerüstbereich aus einem Metalloxid oder Metalloxidgemisch gebildet sein, wobei das Metalloxid oder das Metalloxidgemisch ausgewählt sein kann aus Zirkondioxid, Aluminiumoxid oder einem Zirkonoxid-/Aluminiumoxid-Gemisch, die jeweils unabhängig optional einen Gehalt an Magnesiumoxid (MgO) und/oder Ytterbiumoxid (Y₂O₃) aufweisen.

Nach einer Alternative kann der Dentingerüstbereich oder auch der äußere Bereich des Rohlings aus einem Metalloxid oder ein Metalloxidgemisch oder einem offenporigen keramischen Gerüst gebildet sein, wobei die offenporige Porosität des keramischen Gerüstes von 10 bis 80 Gew.-% betragen kann, insbesondere von 20 bis 70 Gew.-%, bevorzugt von 30 bis 60 Gew.-%, insbesondere kann das offenporige keramische Gerüst mit 20 bis 90 Gew.-%, insbesondere mit 30 bis 80 Gew.-%, bevorzugt mit 40 bis 70 Gew.-% mit mindestens einem Polymer in Bezug auf die Gesamtzusammensetzung gefüllt sein. Erfindungsgemäß kann das offenporige, keramische Gerüst mit einem Polymer gefüllt sein, um insbesondere die Bearbeitungseigenschaften des keramischen Gerüstes in materialabtragenden Verfahren zu verbessern.

Der Dentingerüstbereich oder das offenporige keramische Gerüst des äußeren Bereiches kann vorzugsweise umfassen oder bestehen aus Zirkondioxid, Aluminiumoxid, Silikat-Mineral, vorzugsweise Feldspat, Mischoxid(e) umfassend Zirkondioxid und Aluminiumoxid und/oder Siliciumcarbid. Besonders bevorzugt ist Zirkondioxid, insbesondere mit einem Gehalt an Zirkondioxid von größer gleich 50 Gew.-%, insbesondere mit einem Gehalt größer gleich 70 Gew.-% an Zirkondioxid. Alternativ bevorzugt ist ein Aluminiumoxid mit einem Gehalt von größer gleich 95 Gew.-%, insbesondere größer gleich 99,7 Gew.-%, bevorzugt größer gleich 99,99 Gew.-%. Des Weiteren weisen besonders bevorzugte keramische Gerüste einen Gehalt an Zirkondioxid von größer gleich 50 bis 100 Gew.-% auf, optional zusätzlich umfassend Magnesium, wie (Mg-PSZ, teilstabilisert), MgO, Zirkondioxid (Y-TZP, teilstabilisert) umfassend Y₂O₃, Zirkondioxid HIP Zustand (Y-TZP, teilstabilisert) umfassend Y₂O₃, ZrO₂/Al₂O₃ Mischoxid, SiSiC ein mit Silicium infiltriertes Siliciumcarbid, Siliciumcarbid gesintert ohne freies Silicium, heißgepresstes Siliciumcarbid ohne freies Silicium. Bevorzugt sind keramische Gerüste mit einem Gehalt an Zirkondioxid, Aluminiumoxid, Mischoxid umfassend Zirkondioxid und/oder Siliciumcarbid von größer gleich 70 Gew.-% bis 100 Gew.-%, insbesondere größer gleich 73 Gew.-%, bevorzugt größer gleich 85 Gew.-%, größer gleich 90 Gew.-%, wobei das Gerüst vorzugsweise mit einer Yttrium-Verbindung und/oder Magnesiumoxid stabilisiert ist.

Nach einer bevorzugten Alternative kann der Dentingerüstbereich ein Metalloxid oder ein Metalloxidgemisch umfassen, insbesondere umfassend einen Gehalt an Zirkondioxid von 50 bis 100 Gew.-%, insbesondere von 70 bis 100 Gew.-%, bevorzugt von 85 bis 100 Gew.-%, besonders bevorzugt von 90 bis 100 Gew.-%, und optional umfassend einen Gehalt mindestens eines anderen Metalloxids, Halbmetalloxids und/oder Siliciumcarbids, insbesondere eines der vorgenannten Oxide oder Gemische dieser ausgewählt aus Yttrium, Aluminium, Magnesium, Kalium, Calcium, Lithium, und optional Silicium, mit einem Gehalt von 0 bis 50 Gew.-%, insbesondere von 0 bis 30 Gew.-%, bevorzugt von 0 bis 15 Gew.-%, besonders bevorzugt von 0 bis 10 Gew.-%, wobei die Gesamtzusammensetzung 100 Gew.-% beträgt. Als andere Metalloxide und Halbmetalloxide sind bevorzugt Yttrium Oxid, insbesondere Y₂O₃, MgO, Al₂O₃, insbesondere mit einem Gehalt von 0 bis 50 Gew.-%, insbesondere von 0 bis 30 Gew.-%, bevorzugt von 0 bis 15 Gew.-%, besonders bevorzugt von 0 bis 10 Gew.-%.

Nach einer bevorzugten Alternative kann der äußere Bereich ein keramisches Gerüst umfassen, insbesondere umfasst der äußere Bereich ein offenporiges keramisches Gerüst, bevorzugt eine dentale Hybridkeramik mit Polymeranteil, insbesondere umfassend einen Gehalt an Zirkondioxid und/oder Feldspat von 50 bis 99,9 Gew.-%, insbesondere von 70 bis 99,9 Gew.-%, bevorzugt von 85 bis 99,9 Gew.-%, besonders bevorzugt von 90 bis 99,9 Gew.-% oder von 50 bis 97 Gew.-%, und optional umfassend einen Gehalt anderer Metalloxide, Halbmetalloxide, Siliciumcarbid, insbesondere eines der vorgenannten, oder Gemischen dieser, wobei die Metalle des anderen Metalloxids, Halbmetalloxids und/oder Siliciumcarbids ausgewählt aus Yttrium, Aluminium, Magnesium, Kalium, Calcium, Lithium, und optional Silicium, mit einem Gehalt von 0,1 bis 50 Gew.-% oder von 3 bis 50 Gew.-%, insbesondere von 0,1 bis 30 Gew.-%, bevorzugt von 0,1 bis 15 Gew.-%, besonders bevorzugt von 0,1 bis 10 Gew.-% des anderen Metalloxids, Metalloxide, Halbmetalloxide, Siliciumcarbid, wobei die des keramischen Gesamtzusammensetzung 100 Gew.-% beträgt. Vorzugsweise umfasst der äußere Bereich eine Hybridkeramik umfassend von 50 bis 98 Gew.-% eines keramischen Gerüstes, insbesondere 80 bis 90 Gew.-%, und 2 bis 50 Gew.-% an Polymeranteil, insbesondere 10 bis 20 Gew.-%, wobei die Gesamtzusammensetzung der Hybridkeramik 100 Gew.-% beträgt.

Ein erfindungsgemäß besonders bevorzugter Dentingerüstbereich umfasst ein Metalloxid oder ein Metalloxidgemisch oder der äußere Bereich umfasst ein keramisches Gerüst, insbesondere umfasst der äußere Bereich ein offenporiges keramisches Gerüst, umfassend einen Gehalt an Zirkondioxid und/oder Feldspat von 50 bis 98 Gew.-%, insbesondere von 70 bis 98 Gew.-%, sowie optional einem Gehalt an Yttriumoxid, insbesondere Yttrium(III)oxid, von 0,01 bis 20 Gew.-%, insbesondere von 0,1 bis 15 Gew.-%, besonders bevorzugt von 1 bis 15 Gew.-%, sowie optional oder alternativ mit einem Gehalt an Magnesiumoxid von 0,01 bis 10 Gew.-%, insbesondere von 0,1 bis 5 Gew.-%, und/oder optional mit einem Gehalt an Aluminiumoxid, insbesondere Al₂O₃, von 0,01 bis 30 Gew.-%, insbesondere von 0,1 bis 25 Gew.-%, wobei der Gesamtgehalt 100 Gew.-% beträgt. Typische erfindungsgemäße keramische Gerüste umfassen ZrO₂/Y₂O₃ mit einem Gehalt von 95 Gew.-% an ZrO₂ und 5 Gew.-% Y₂O₃ oder ZrO₂/Y₂O₃/Al₂O₃ mit einem Gehalt von circa 95 Gew.-% ZrO₂ und circa 4,75 Gew.-% Y₂O₃ und circa 0,25 Gew.-% Al₂O₃; ZrO₂/Al₂O₃/Y₂O₃ mit einem Gehalt von circa 76 Gew.-% ZrO₂ und 20 Gew.-% Al₂O₃ und 4 Gew.-% Y₂O₃; ZrO₂N₂O₃ mit einem Gehalt von circa 90 Gew.-% ZrO₂ und 10 Gew.-% Y₂O₃; ZrO₂/MgO mit einem Gehalt von circa 96,5 Gew.-% ZrO₂ und 3,5 Gew.-% MgO. Ein gleichfalls bevorzugtes offenporiges Gerüst, insbesondere als Komponente zur Herstellung einer Hybridkeramik oder in einer Hybridkeramik, ist aus Feldspat gebildet. Durch Infiltration mit einem polymerisierbaren Monomer, insbesondere mit UDMA und/oder TEGDMA, und Polymerisation kann eine Hybridkeramik, insbesondere zur Herstellung des äußeren Bereiches, hergestellt werden oder ist eine entsprechende Hybridkeramik erhältlich.

Nach nicht erfindungsgemäßen Alternativen kann (iv) der äußere Bereich des Rohlings aus einem dentalen Kompositmaterial, optional einer Glaskeramik einer spezifischen Zusammensetzung; einer dentalen Keramik, wie einer offenporigen Keramik gebildet sein. Erfindungsgemäß ist (iv) der äußere Bereich des Rohlings aus oder einer Hybridkeramik, insbesondere einer dentalen Hybridkeramik mit Polymeranteil, besonders bevorzugt einer Hybridkeramik mit einem offenporigen keramischen Gerüst mit Polymeranteilgebildet. Das offenporige keramische Gerüst kann vorzugsweise die vorgenannte oder nachfolgend genannte Zusammensetzung aufweisen. Der Polymeranteil umfasst vorzugsweise die nachfolgend genannten Polymerkomponenten.

Ferner ist es nicht erfindungsgemäß, wenn der (iv) äußere Bereich des dentalen Rohlings aus
A) einem dentalen Kompositmaterial gebildet ist, umfassend
   (a) 40 bis 80 Gew.-% anorganische Füllstoffe, insbesondere umfassend Dentalgläser; insbesondere Bariumglaspulver und/oder Strontiumglaspulver, Barium-Aluminium-Fluorsilikat Dentalgläser; und/oder auch Calciumcarbonat (sogenannte "whisker")
   (b) 60 bis 20 Gew.-% mindestens einer Polymerkomponente basierend auf der Polymerisation von mindestens einem Monomer oder einer Monomermischung umfassend Urethan(meth)acrylat, wie UDMA (Diurethandimethacrylat), Tricyclo[5.2.1.02.6]decan-(TCD)-Urethan-Derivat, TCD-di-HEA (Bis(acryloyloxymethyl)tricyclo[5.2.1.02,6]decan), 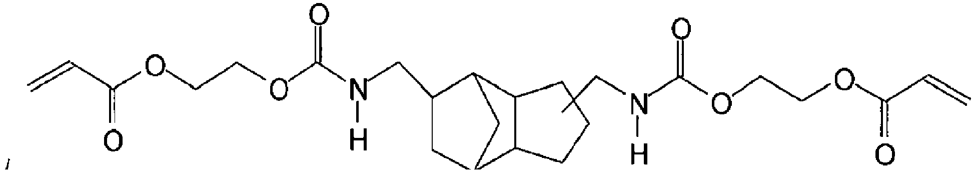
   insbesondere 2-Propenoicacid, (octahydro-4,7-methane-1H-indene-5-diyl)bis(methyleneiminocarbonyloxy-2,1-ethanediyl)ester), TCD-di-HEMA (Bis(methacryloyloxymethyl)tricyclo[5.2.1.0^{2,6}]decan-HEMA (HEMA: 2-hydroxyethylmethacrylat), dem Methylacrylat-Derivat des TCD-di-HEAs, und/oder TEGDMA (Triethylenglycol-dimethacrylat) und optional mindestens einem dreifach-, vierfach- oder fünffach-Vernetzer aufweist, oder
B) einem Lithiumdisilikat als dentale Glaskeramik gebildet ist. Erfindungsgemäß ist der (iv) äußere Bereich des dentalen Rohlings aus
C) einer Hybridkeramik, insbesondere einer dentaler Hybridkeramik mit Polymeranteil, vorzugsweise einer dentalen Hybridkeramik, wobei der Keramikanteil vorzugsweise ein offenporiges keramisches Gerüst ist, gebildet. Die Poren des offenporigen keramischen Gerüstes sind vorzugsweise mit einem Polymer gefüllt und bilden den Polymeranteil.

Entsprechend einer Ausführungsform können die anorganischen Füllstoffe im Kompositmaterial Dentalgläser umfassen, die unterschiedliche Partikelgrößenfraktionen umfassen können, wie grobteilige Dentalgläser und feinteilige Dentalgläser sowie optional Dentalgläser mit einer mittleren Partikelgröße. Generell kann die Partikelgrößenverteilung von 5 nm bis 20 µm betragen. Die mittlere Partikelgröße der grobteiligen Dentalgläser beträgt vorzugsweise von 5 bis 10 µm, insbesondere um 7 µm und die der feinteiligen Dentalgläser von 0,5 bis 2 µm, insbesondere um 1 µm. Optional können zusätzlich Dentalgläser einer mittleren Partikelgröße von 2 bis 5 µm und/oder auch sehr grobteilige Dentalgläser mit einer Partikelgröße von 10 bis 50 µm eingesetzt werden.

Die bevorzugte Biegefestigkeit des Kompositmaterials beträgt 145 bis 169 MPa nach DIN EN 4049:2009.

Nachfolgende Zusammensetzung des Lithiumdisilikats ist erfindungsgemäß bevorzugt:
55 bis 70 Gew.-% SiO₂, 10 bis 15 Gew.-% LiO₂, 10 bis 20 Gew.-% des Stabilisators ausgewählt aus der Gruppe bestehend aus ZrO₂, HfO₂ oder Mischungen hiervon, 0,1 bis 5 Gew.-% K₂O, 0,1 bis 5 Gew.-% Al₂O₃, 0 bis 10 Gew.-% an Zusatzstoffen sowie 0 bis 10 Gew.-% an Farbstoffen oder Pigmenten.

Die Polymerkomponente kann alternativ oder zusätzlich auf der Polymerisation von Monomeren umfassend mindestens eines der folgenden Monomere basieren. Entsprechend kann der Polymeranteil auf der Polymerisation von Monomeren umfassend mindestens eines der folgenden Monomere basieren: Als Monomere kommen die auf dem Dentalgebiet üblichen Monomere in Betracht: Beispiele sind radikalisch polymerisierbare monofunktionelle Monomere wie Mono(meth)acrylate, Methyl-, Ethyl-, Butyl-, Benzyl-, Furfuryl- oder Phenyl(meth)-acrylat, polyfunktionelle Monomere wie polyfunktionelle Acrylate bzw. Methacrylate, z.B. Bisphenol-A-di(meth)acrylat, Bis-GMA (ein Additionsprodukt aus Methacrylsäure und Bisphenol-A-diglycidylether), UDMA (Urethandimethacrylat), z.B. ein Additionsprodukt aus 2-Hydroxyethylmethacrylat und 2,2,4-Hexamethylendiisocyanat), Di-, Tri- oder Tetraethylenglykoldi(meth)acrylat, Decandioldi(meth)acrylat, Dodecandioldi-(meth)acrylat, Hexyldecandioldi(meth)acrylat, Trimethylolpropan-tri(meth)acrylat, Pentaerythrittetra(meth)-acrylat sowie Butandioldi(meth)acrylat. Besonders bevorzugt sind Bis-GMA, TEDMA (Triethylenglykoldimethacrylat), TCD-di-HEMA (Bis (methacryloyloxymethyl) tricyclo-[5.2.1.02,6]decan) und TCD-di-HEA (Bis-(acryloyloxymethyl)-tricyclo[5.2.1.02,6] decan).

Mindestens ein Urethan(meth)acrylat kann ausgewählt sein aus Bis(methacryloxy-2-ethoxycarbonylamino)-alkylen, Diurethanacrylat Oligomer, Alkyl-funktionellen Urethandimethacrylat Oligomeren, Aromatisch-funktionalisierten Urethandimethacrylat Oligomere, aliphatischen ungesättigten Urethanacrylate, Bis(methacryloxy-2-ethoxycarbonylamino) substituierten Polyether, aromatischen Urethandiacrylat Oligomeren, aliphatischen Urethandiacrylat Oligomeren, monofunktionellen Urethanacrylaten, aliphatischen Urethandiacrylaten, hexafunktionellen aliphatischen Urethanharzen, aliphatischem Urethantriacrylat, UDMA, aliphatischem Urethanacrylat Oligomer, ungesättigtem aliphatischem Urethanacrylat.

Als polyfunktionelles Monomer kann mindestens ein Monomer ausgewählt aus den folgenden oder Gemische dieser eingesetzt werden: 2,2-Bis-4-(3-methacryloxy-2-hydroxy-propyl)-phenylpropan) (Bis-GMA), d.h. das Umsetzungsprodukt von Glycidylmethacrylat und Bisphenol-A (OH-gruppenhaltig), und 7,7,9-Trimethyl-4,13-dioxo-3,14-dioxa-5,12-diazahexadecan-1,16-diyldimethacrylat (UDMA), d.h. das Urethandimethacrylat aus 2 Mol 2-Hydroxyethylmethacrylat (HEMA) und 1 Mol 2-2,4-Trimethylhexamethylendiisocyanat (urethangruppenhaltig). Darüber hinaus sind Umsetzungsprodukte von Glycidylmethacrylat mit anderen Bisphenolen, wie z.B. Bisphenol-B(2,2'-Bis-(4-hydroxyphenyl)-butan), Bisphenol-F(2,2'-Methylendiphenol) oder 4,4'-Dihydroxydiphenyl, sowie Umsetzungsprodukte von 2 Mol HEMA oder 2-Hydroxypropyl(meth)acrylat mit, insbesondere 1 Mol, bekanntem Diisocyanat, wie z.B. Hexamethylendiisocyanat, m-Xylylendiisocyanat oder Toluylendiisocyanat, als Vernetzermonomere geeignet.

Als polyfunktionelle Monomere können ebenfalls eingesetzt werden: Diethylenglycol-di(meth)acrylat, Decandioldi(meth)acrylat, Trimethylolpropantri-(meth)acrylat, Pentaerythrit-tetra(meth)acrylat sowie Butandioldi(meth)acrylat, 1,10-Decandioldi(meth)acrylat, 1,12-Dode-candioldi(meth)acrylat.

Die Polymerkomponente kann alternativ oder zusätzlich auf der Polymerisation von Monomeren umfassend mindestens eines der folgenden Monomere basieren. Entsprechend kann der Polymeranteil auf der Polymerisation von Monomeren umfassend mindestens eines der folgenden Monomere basieren: Ein oder mehrere ethylenisch ungesättigte Verbindungen mit oder ohne Säurefunktionalität. Beispielsweise Acrylsäureester, Methacrylsäureester, Hydroxyfunktionellen Acrylsäureester, hydroxyfunktionellen Methacrylsäureester und Kombinationen davon. Sowie Mono-, Di- oder Poly-(Meth) Acrylate, d.h. Acrylate und Methacrylate, wie Methyl(meth)acrylat, Ethylacrylat, Isopropylmethacrylat, n-Hexylacrylat, Stearylacrylat, Allylacrylat, Glycerintriacrylat, Ethylenglycoldiacrylat, Diethylenglycoldiacrylat, Triethylenglycoldimethacrylat, 1,3-Propandiol(meth)acrylat, Trimethylolpropantriacrylat, 1,2,4-Butantriol-trimethacrylat, 1,4-Cyclohexandiol-diacrylat, Pentaerythrit-tetra(meth)acrylat, Sorbithexacrylate, Tetrahydrofurfuryl(meth)acrylat, Bis[I-(2-acryloxy)]-p-ethoxyphenyl-dimethylmethane, Bis [I-(3-acryloxy-2-hydroxy)]-p-propoxyphenyldimethylmethan, ethoxyliertes Bisphenol-A-di(meth) acrylat und Trishydroxyethylisocyanurat-isocyanurat trimethacrylat, (Meth)acrylamiden (dh, Acrylamiden und Methacrylamiden), wie (Meth) acrylamid, Methylen-bis-(meth)acrylamid und Diaceton(meth)acrylamid; Urethan(meth)acrylate; die Bis-(Meth)acrylate von Polyethylenglykolen (vorzugsweise mit einem Molekulargewicht von 200-500), copolymerisierbare Mischungen von acrylierten Monomeren, und Vinylverbindungen wie Styrol, Diallylphthalat, Divinylsuccinat, Divinyladipat und Divinylphthalat. Andere geeignete radikalisch polymerisierbare Verbindungen umfassen Siloxan-funktionelle (Meth)acrylate und Fluorpolymerfunktionelle (Meth)acrylate oder Mischungen von zwei oder mehreren radikalisch polymerisierbaren Verbindungen können bei Bedarf verwendet werden.

Die Polymerkomponente kann alternativ oder zusätzlich auf der Polymerisation von Monomeren umfassend mindestens eines der folgenden Monomere basieren. Entsprechend kann der Polymeranteil auf der Polymerisation von Monomeren umfassend mindestens eines der folgenden Monomere basieren: Hydroxyalkyl(meth) acrylaten, wie 2-Hydroxyethyl (meth) acrylat und 2-Hydroxypropyl(meth)acrylat; Glycerinmono-oder Di-(meth)acrylat; Trimethylolpropan Mono-oder Di-(Meth)acrylat; Pentaerythrit Mono-, Di-und Tri-(meth)acrylat; Sorbitol Mono-, Di-, Tri-, Terra-oder penta-(meth)acrylat und 2,2-Bis[4-(2-Hydroxy-3-methacryloxypropoxy)phenyl]propan (BisGMA) oder Mischungen von ethylenisch ungesättigter Verbindungen. Sowie auf PEGDMA (Polyethylenglykoldimethacrylat mit einem Molekulargewicht von etwa 400), GDMA (Glycerindimethacrylat), und/oder NPGDMA (Neopentylglykoldimethacrylat) sowie Gemische enthaltend diese.

Zur Initiierung der Polymerisation können die Komposite enthalten einen Polymerisationsinitiator, beispielsweise einen Initiator für die radikalische Polymerisation. Je nach Art des verwendeten Initiators können die Mischungen kalt, durch Strahlen vernetzt, d.h. UV-vernetzt oder durch Zufuhr von Wärme polymerisierbar sein bzw. polymerisiert worden sein. Als Initiatoren für die Temperatur induzierte Polymerisation können bekannte Peroxide eingesetzt werden, wie Dibenzoylperoxid, Dilauroylperoxid, tert.-Butylperoctoat oder tert.-Butylperbenzoat, aber auch alpha, alpha'-Azo-bis(isobutyroethylester), Benzpinakol und 2,2'-Dimethylbenzpinakol.

Als Photoinitatoren kommen beispielsweise Benzoinalkylether oder -ester, Benzilmonoketale, Acylphosphinoxide oder aliphatische und aromatische 1.2-Diketoverbindungen, wie beispielsweise 2,2-Diethoxyacetophenon, 9,10-Phenanthrenchinon, Diacetyl, Furil, Anisil, 4,4'-Dichlorbenzil und 4,4'-Dialkoxybenzil oder Campherchinon, in Frage. Die Photoinitiatoren werden vorzugsweise zusammen mit einem Reduktionsmittel verwendet. Beispiele für Reduktionsmittel sind Amine wie aliphatische oder aromatische tertiäre Amine, beispielsweise N,N-Dimethyl-p-toluidin oder Triethanolamin, Cyanethylmethylanilin, Triethylamin, N,N-Dimethylanilin, N-Methyldiphenyl-amin, N,N-Dimethyl-sym.-xylidin, N,N-3,5-Tetramethylanilin und 4-Dimethylamino-benzoesäureethylester oder organische Phosphite. Gängige Photoinitiatorsysteme sind z.B. Campherchinon plus Ethyl-4-(N,N-dimethylamino)benzoat, 2-(Ethylhexyl)-4-(N,N-dimethylamino)benzoat oder N,N-Dimethylaminoethylmethacrylat. Als Initiator für die durch UV-Licht initiierte Polymerisation eignet sich besonders 2,4,6-Trimethylbenzoyldiphenylphosphinoxid. UV-Photoinitiatoren können allein, in Kombination mit einem Initiator für sichtbares Licht, einem Initiator für die Kalthärtung und/oder einem Initiator für die Temperatur induzierte Härtung eingesetzt werden.

Als Initiatoren für die Kaltpolymerisation werden Radikale bildende Systeme, z. B. Benzoyl- bzw. Lauroylperoxid zusammen mit Aminen wie N,N-Dimethyl-sym.-xylidin oder N,N-Dimethyl-p-toluidin verwendet. Es können auch dual härtende Systeme verwendet werden, z. B. Photoinitiatoren mit Aminen und Peroxiden. Die Initiatoren werden vorzugsweise in Mengen von 0,01 bis 1 Gew.-% bezogen auf die Gesamtmasse der Mischung verwendet.

Als Initiatoren für die Kaltpolymerisation eignet sich auch ein Redoxsystem umfassend ein Peroxid, und ein Reduktionsmittel ausgewählt aus Ascorbinsäure, Ascorbinsäurederivat, Barbitursäure oder ein Barbitursäurederivat, Sulfinsäure, Sulfinsäurederviat, besonders bevorzugt ist ein Redoxsystem umfassend
(i) Barbitursäure oder Thiobarbitursäure oder ein Barbitursäure- oder Thiobarbitursäurederivat un
(ii) mindestens ein Kupfersalz oder Kupferkomplex und
(iii) mindestens eine Verbindung mit einem ionischen Halogenatom, besonders bevorzugt ist ein Redoxsystem umfassend 1-Benzyl-5-Phenylbarbitursäure, Kupferacetylacetonat und Benzyldibutylammoniumchlorid. Besonders bevorzugt wird die Polymerisation im 2-Komponenten Dentalmaterial über ein Barbitursäurederivat gestartet.

Bei der Kaltpolymerisation kann es zweckmäßig sein, wenn das Kompositmaterial aufgeteilt in zwei Komponenten vorliegt, die zur Aushärtung durch Vermischen vorgesehen sind. Es ist auch möglich, das Material so bereitzustellen, dass es sowohl durch VIS- und/oder UV-Licht als auch durch Vermischen zweier Komponenten zu härten ist.

Die anorganischen Füllstoffe umfassen vorzugsweise Barium-Aliminium-Fluorsilikat Dentalgläser.

Die a) 40 bis 80 Gew.-% anorganischen Füllstoffe können vorzugsweise umfassen 0,5 bis 10 Gew.-% nicht-agglomerierte Nanofüller mit Partikelgrößen von 1 bis 50 nm;
mindestens 60 Gew.% eines Gemisches von Füllstoffen aus 50 bis 90 Gew.-% grob- und 10 bis 50 Gew.-% feinteiligen Dentalgläsern, welche ein Größenverhältnis, bezogen auf die mittlere Partikelgröße (d₅₀-Wert), von feinteilig zu grobteilig von 1 : 4 bis 1 : 30 aufweisen, wobei sich die Angaben in Gew.-% auf die Gesamtzusammensetzung an anorganischen Füllstoffen bezieht, optional kann in der Füllstoffkomponente mindestens ein weiteres Dentalglas mit sich von den grob- und feinteiligen Dentalgläsern unterscheidender Partikelgröße enthalten sein.

Durch ein Gemisch von Füllstoffen aus grob- und feinteiligen Dentalgläsern, welche ein Größenverhältnis von 1 : 4 bis 1 : 30, vorzugsweise 1 : 4 bis 1 : 20, besonders ca. 1 : 5 bis 1 : 10 aufweisen, lässt sich eine bessere Packung der Füllstoffpartikel und damit ein höherer Füllstoffanteil erzielen. Der höhere Füllstoffanteil ergibt einen geringeren Anteil an schrumpfungsfähiger Monomermatrix (s.o.). Der Anteil an feinteiligen Dentalgläsern sollte max. 40 Gew.-% in der Gesamtzusammensetzung der Füllstoffe betragen.

Als Dentalgläser eignen sich besonders Bariumglaspulver, vorzugsweise Barium-Aluminium-Fluorsilikat Dentalgläser und/oder Strontiumglaspulver. Die mittlere Partikelgröße der grobteiligen Dentalgläser beträgt vorzugsweise 5 bis 10 µm, insbesondere um 7 µm und die der feinteiligen 0,5 bis 2 µm , insbesondere 1 µm. Optional vorhandene weitere Dentalgläser haben z.B. mittlere Korngrößen von 2 bis 5 oder von 10 bis 50 µm. Die anorganischen Füllstoffe können demnach Dentalgläser mit insgesamt drei oder mehr Kornfraktionen aufweisen. Sie können auch weitere, herkömmliche, auf dem Dentalgebiet übliche Füllstoffe enthalten, wie etwa Quarz-, Glaskeramik- oder Mischungen davon. Darüber hinaus können die Komposite Füllstoffe zur Erzielung einer erhöhten Röntgenopazität enthalten. Die mittlere Partikelgröße des röntgenopaken Füllstoffs liegt vorzugsweise im Bereich von 100 bis 300 nm, insbesondere 180 bis 300 nm. Als röntgenopake Füllstoffe eignen sich z. B. die in der DE 35 02 594 A1 beschriebenen Fluoride der Seltenenerdmetalle, d. h. die Trifluoride der Elemente 57 bis 71. Ein besonders bevorzugt verwendeter Füllstoff ist Ytterbiumfluorid, insbesondere Ytterbiumtrifluorid mit einer mittleren Partikelgröße von etwa 300 nm. Die Menge des röntgenopaken Füllstoffs beträgt vorzugsweise 10 bis 50 Gew.-%, besonders bevorzugt 20 bis 30 Gew.-%, bezogen auf den Gesamtfüllstoffgehalt.

Außerdem können gefällte Mischoxide, wie beispielsweise ZrO₂/SiO₂, als Füllstoffe eingesetzt werden. Bevorzugt sind Mischoxide mit einer Partikelgröße von 200 bis 300 nm und insbesondere etwa 200 nm. Die Mischoxidpartikel sind vorzugsweise kugelförmig und weisen eine einheitliche Größe auf. Die Mischoxide haben vorzugsweise einen Brechungsindex von 1,52 bis 1,55. Gefällte Mischoxide werden vorzugsweise in Mengen von 25 bis 75 Gew.-% und besonders von 40 bis 75 Gew.-% verwendet.

Als nicht-agglomerierte Nanofüller können beispielsweise SiO₂, ZrO₂, TiO₂ und/oder Al₂O₃ mit Partikelgrößen < 50 nm als anorganischer Füllstoff eingesetzt werden.

Die (b) 60 bis 20 Gew.-% mindestens einer Polymerkomponente im Kompositmaterial basiert vorzugsweise auf der Polymerisation einer Monomermischung von i. 60 - 80 Gew. % TCD-di-HEMA oder TCD-di-HEA und optional Bis-GMA, ii. 10 bis 18 Gew.-% UDMA, iii. Rest TEDMA und/oder mindestens einem dreifach-Vernetzer, vierfach- und/oder fünffach-Vernetzer, und 0 bis 1 Gew. % Initiator(en) in Bezug auf die gesamte Monomermischung. Der Gehalt an TCD-Monomeren in der Gesamtzusammensetzung des Dentalkomposits beträgt vorzugsweise von 1 bis 15 Gew.-%.

Das Lithiumdisilikat kann umfassen 50 bis 85 Gew.-% Siliziumdioxid, 10 bis 20 Gew.-% Li₂O, 0,0 bis 15,00 Gew.-% K₂O, 0,0 bis 8,0 Gew.-% ZrO₂, 0,0 bis 5,0 Gew.-% Al₂O₃, 0,0 bis 5,0 Gew.-% MgO, und optional 0,0 bis 10,0 Gew.-% anorganische Pigmente, insbesondere oxidische Pigmente, wobei die Gesamtzusammensetzung an Lithiumdisilikat 100 Gew.-% beträgt.

Das Lithiumdisilikat kann vorzugsweise als Röntgenopaker einen Gehalt eines in der DE3502594A1 beschriebenen Fluoride der Seltenenerdmetalle umfassen, d. h. die Trifluoride der Elemente 57 bis 71. Ein besonders bevorzugt verwendeter Füllstoff ist Ytterbiumfluorid, insbesondere Ytterbiumtrifluorid mit einer mittleren Partikelgröße von etwa 300 nm. Die Menge des röntgenopaken Füllstoffs beträgt vorzugsweise 0,001 bis 50 Gew.-% in Bezug auf den Gesamtgehalt an Lithiumdisilikat, vorzugsweise 1 bis 30 Gew.-%, besonders bevorzugt 10 bis 30 Gew.-%, in Bezug auf den Gesamtgehalt an Lithiumdisilikat.

Erfindungsgemäß umfasst die Hybridkeramik einen Keramikanteil, wobei der Keramikanteil ein keramisches Gerüst ist. Das keramische Gerüst umfasst von 50 bis 70 Gew.-% SiO₂, von 15 bis 30 Gew.-% Al₂O₃, von 5 bis 15 Gew.-% Na₂O, von 2 bis 10 Gew.-% K₂O, von 0,05 bis 5 Gew.-% B₂O₃, von 0,0001 bis 1 Gew.-% ZrO₂ und von 0,0001 bis 1 Gew.-% CaO, wobei die Gesamtzusammensetzung ad. 100 Gew.-% beträgt. Besonders bevorzugt umfasst das keramische Gerüst von 55 bis 65 Gew.-% SiO₂, von 20 bis 25 Gew.-% Al₂O₃, von 8 bis 12 Gew.-% Na₂O, von 3 bis 7 Gew.-% K₂O, von 0,05 bis 3 Gew.-% B₂O₃, von 0,0001 bis 1 Gew.-% ZrO₂ und von 0,0001 bis 1 Gew.-% CaO, wobei die Gesamtzusammensetzung des keramischen Gerüstes ad. 100 Gew.-% beträgt. Alternativ ist eine Hybridkeramik bevorzugt mit einem Keramikanteil aus Feldspat, insbesondere Feldspatkeramik.

Der Anteil des Feldspats, insbesondere der Feldspatkeramik, kann vorzugsweise von 80 bis 95 Gew.-% und der Anteil an Polymer, vorzugsweise basierend auf Urethan(meth)acrylaten und/oder (Meth)acrylat-Derivaten, wie UDMA und/oder TEGDMA, kann vorzugsweise von 5 bis 20 Gew.-% betragen, wobei die Gesamtzusammensetzung der Hybridkeramik 100 Gew.-% beträgt.

Der Polymeranteil in der Hybridkeramik, insbesondere als Polymerkomponente, basiert vorzugsweise auf der Polymerisation von UDMA (Urethanimethacylat) und TEGDMA (Triethylenglykoldimethacrylat), wobei vorzugsweise der Anteil des Polymeranteils, insbesondere als Polymerkomponente, von 2 bis 50 Gew.-%, vorzugsweise von 10 bis 20 Gew.-%, in der Gesamtzusammensetzung der Hybridkeramik beträgt.

Die Biegefestigkeit des Hybridmaterials beträgt vorzugsweise mindestens 140 [MPa], vorzugsweise von 150 bis 160 [MPa]. Die Biegefestigkeit kann nach ISO 10477 oder nach ISO 6872 bestimmt werden. Die Härte des Hybridmaterials beträgt vorzugsweise etwa 2,5 [GPa]. Der Elastizitätsmodul der Hybridkeramik, vorzugsweise der Feldspat enthaltenden Hybridkeramik, liegt vorzugsweise im Bereich von 25 bis 35 GPa, vorzugsweise bei 30 GPa +/- 2,5 GPa. Der Elastizitätsmodul von Schmelz liegt bei 72,7 bis 105,5 GPa und der von Dentin bei 17,7 bis 29,8 GPa. Der Vorteil der Hybridkeramik ist, dass das Elastizitätsmodul zwischen dem des natürlichen Schmelzes und des natürlichen Dentins liegt.

Besonders bevorzugt weist die Hybridkeramik einen Polymeranteil, insbesondere als Polymerkomponente, von 2 bis 50 Gew.-% auf, insbesondere von 2 bis 25 Gew.-%, vorzugsweise von 10 bis 20 Gew.-%, sowie einen Keramikanteil, insbesondere eines offenporigen keramischen Gerüstes, von 50 bis 98 Gew.-% auf, insbesondere von 75 bis 98 Gew.-% in Bezug auf die Gesamtzusammensetzung (ad. 100 Gew.-%) der Hybridkeramik, wobei die Hybridkeramik im Anteil der Polymerkomponente jeweils 0,0 bis 8,0 Gew.-% Pigmente enthalten kann. Bevorzugte Keramikanteile umfassen Zirkondioxid und/oder Feldspat. Bevorzugte Polymere in der Hybridkeramik basieren auf der Umsetzung von UDMA, HEMA, TEGDMA und/oder Mischungen enthalten mindestens eines der genannten Monomere.

Die Hybridkeramik des äußeren Bereiches des Rohlings umfasst mindestens einen Polymeranteil, insbesondere als Polymerkomponente, zur Verbesserung der Bearbeitungseigenschaften des Rohlings, wobei der Rohling ein offenporiges keramisches Gerüst aufweist, das zu 2 bis 50 Gew.-% einen Polymeranteil mindestens eines Polymers in Bezug auf die Gesamtzusammensetzung des dentalen keramischen Rohlings aufweist. Die Begriffe Polymer, Polymeranteil und Polymerkomponente werden synonym verwendet.

Entsprechend einer weiteren Ausführungsform kann der Rohling einen (iii) Dentingerüstbereich mit folgender Farbe entsprechend dem Farbraum L*a*b aufweisen, insbesondere nach DIN EN ISO 11664-4, mit L 50 bis 80, a 2 bis 5 und b 15 bis 22, und/oder einen (iv) äußeren Bereich mit folgender Farbe entsprechend dem Farbraum L*a*b aufweisen, insbesondere nach DIN EN ISO 11664-4, mit L 60 bis 95, a -5 bis 3 und b 3 bis 2. Der Dentingerüstbereich ist vorzugsweise aus einem opaken Material mit den vorgenannten Farben und/oder der äußere Bereich aus einem transparenten Material mit den vorgenannten Farben.

Nach einer Ausführungsform ist es bevorzugt den Dentingerüstbereich aus einem vorgenannten Metalloxid oder Metalloxidgemisch, vorzugsweise einem Zirkondioxid, Zirkondioxid-Aluminiumoxid-Gemisch und den äußeren Bereich aus einer Hybridkeramik, vorzugsweise einem Zirkondioxid und/oder Feldspat, insbesondere eine Feldspatkeramik, enthaltenden Hybridkeramik, auszuwählen. Vorteilhaft können der Detingerüstbereich und der äußere Bereich mit einem Bonding aneinandergeklebt werden.

Hervorzuhebende Vorteile einer Hybridkeramik als äußeren Bereich gegenüber reinen Keramiken sind die geringere Härt, die kürzeren Fräszeiten und/oder der Elastizitätsmodul, der in der Regel zwischen dem des Schmelzes und dem des Dentins liegt. Die Vickers-Härte (HV5) einer Zirkondioxidkeramik (ZrO₂ 88 bis 96 Gew.-%; HfO₂ 1 bis 5 Gew.-%, Y₂O₃ mit 4 bis 6 Gew.-% und kleiner 0,50 Gew.-% Al₂O₃ sowie weiteren Metalloxiden kleiner 0,25 Gew.-%, wie Fe₂O₃ und/oder Na₂O₃, wobei die Gesamtzusammensetzung 100 Gew.-% beträgt) liegt in der Regel bei über 1200 [MPa], insbesondere ohne offene Porosität, sowie in der Regel einem E-Modul von größer 200000 [MPa]. Aus vorgenannten Gründen kann bspw. eine Standardfräszeit bei Keramiken von etwa 148 Minuten (Modus: normal) oder 132 Minuten (Modus: schnell) auf unter 10 (Modus: normal) und unter 6 Minuten (Modus: schnell) für beispielhaft genannte Kronen reduziert werden. Eine Hybridkeramik wird aufgrund des erzielbaren Elastizitätsmoduls daher auch als elastische Keramik bezeichnet. Die Hybridkeramik ist aufgrund des Polymeranteils weniger frakturanfällig. Darüber hinaus ist die Attritionswirkung auf den Zahnschmelz des Antagonisten geringer und somit in der Langzeitanwendung für den gegenüberliegenden natürlichen Zahn besser. Die Einstellung der Farbe kann aufgrund der Verwendung von flüssigen Monomeren zur Herstellung des Polymeranteils wesentlich naturidentischer erfolgen. Gleichfalls kann aufgrund des schichtweisen Aufbaus des Rohlings eine wesentlich natürlicheres Erscheinungsbild und warmer Farbton über eine Wahl der Material- und/oder Farbschichten erzielt werden. Eine Hybridkeramik als äußerer Bereich ist schneller beim Zahnarzt hochglanzpolierbar.

Ebenso Gegenstand der Erfindung ist ein Verfahren zur Herstellung eines dentalen Rohlings sowie ein Rohling erhältlich nach dem Verfahren, wobei vorzugsweise aus dem Rohling durch (material)abtragende Bearbeitung eine dentale prothetische Versorgung erhältlich ist, wobei der Rohling hergestellt wird, indem
(i) ein inneres Verbindungsteil, das in Richtung des koronalen Bereiches des Rohlings einen Gerüstbereich aufweist, insbesondere einen zapfenförmigen Gerüstbereich, und in radikulärer Richtung des Rohlings eine Implantat-Anschlussgeometrie aufweist, bereitgestellt wird, und
(ii) der Gerüstbereich des inneren Verbindungsteils in Richtung des koronalen Bereiches des Rohlings mit einem Dentingerüstbereich verbunden wird, insbesondere ist der Gerüstbereich nicht lösbar mit dem Dentingerüstbereich verbunden, vorzugsweise ist der Gerüstbereich mit dem Dentinbereich formschlüssig, kraftschlüssig, stoffschlüssig oder entsprechend einer Kombination form- und/oder kraft- und/oder stoffschlüssig verbunden, und
(iii) der Dentingerüstbereich in Richtung des koronalen Bereiches des Rohlings mit einem
(iv) äußeren Bereich des Rohlings aus einer Hybridkeramik verbunden wird, insbesondere ist der Dentingerüstbereich nicht lösbar mit dem äußeren Bereich verbunden, vorzugsweise ist der Dentingerüstbereich mit dem äußeren Bereich formschlüssig, kraftschlüssig, stoffschlüssig oder entsprechend einer Kombination form- und/oder kraft- und/oder stoffschlüssig verbunden, und
(v) der dentale Rohling innen in der Implantat-Anschlussgeometrie des inneren Verbindungsteils und optional im Gerüstbereich des inneren Verbindungsteils ein längliches Lumen aufweist, das von der Oberseite bis zur Unterseite der Implantat-Anschlussgeometrie des inneren Verbindungsteils reicht und optional von der Oberseite bis zur Unterseite des Gerüstbereiches des inneren Verbindungsteils reicht, und das Lumen eine Öffnung in krestaler oder lingualer Richtung und eine Öffnung in radikulärer Richtung aufweist. Besonders bevorzugt reicht das Lumen von der Oberseite des äußeren Bereiches bis zur Unterseite der Implantat-Anschlussgeometrie.

Entsprechend einer bevorzugten Ausführungsvariante kann (iii) der Dentingerüstbereich eine oder mehrere Schichten eines Metalloxids oder eines Metalloxidgemisches umfassen, wobei die mehreren Schichten vorzugsweise unterschiedliche Farben entsprechend dem Farbraum L*a*b aufweisen. Entsprechend einer Ausführungsform wird der Gesamteindruck des dentalen Rohlings umfassend das innere Verbindungsteil, den Dentingerüstbereich und den äußeren Bereich auf den Vita classic Farbschlüssel A1 bis D4 eingestellt. Dabei entsprechen die Farben A1 bis A4 (Rötlich-bräunlich), B1 bis B4 (Rötlich-gelblich), C1 - C4 (Grautöne), D2 - D4 (Rötlichgrau).

Dabei ist es erfindungsgemäß besonders bevorzugt, wenn der Gesamteindruck aller Farbschichten im Dentingerüstbereich L 50 bis 80, a 2 bis 5 und b 15 bis 22 und/oder der äußere Bereich L 60 bis 95, a -5 bis 3 und b 3 bis 2 des dem Farbraums L*a**b aufweist.

Entsprechend einer bevorzugten Ausführungsform kann der Dentingerüstbereich ein bis fünf Schichten eines Metalloxids oder eines Metalloxidgemisches sowie optional Pigmente aufweisen. Die Schichtdicken können jeweils unabhängig voneinander von 200 µm bis 5 mm, insbesondere von 200 µm bis 1 mm, bevorzugt von 0,5 mm bis 1 mm betragen. Besonders bevorzugt umschließen die eine bis fünf Schichten den äußeren Gerüstbereich, der beispielsweise aus einer Titanlegierung gebildet ist, vollständig.

Der Dentingerüstbereich, insbesondere die jeweiligen Schichten des Dentingerüstbereiches weisen, vorzugsweise jeweils unabhängig voneinander, Pigmente auf. Die Pigmente weisen in der Regel eine Partikelgrößen von d₉₀ kleiner gleich 20 µm bis kleiner 15 µm und auch kleiner gleich 10 µm auf. Üblicherweise liegt der d₅₀ der Pigmentpartikel um 0,001 bis 10 µm. Als anorganische Pigmente können übliche anorganische Pigmente eingesetzt werden. Geeignet zur Herstellung des Dentingerüstbereiches sind anorganische Pigmente, die bis oberhalb von 850 °C, vorzugsweise bis 1200 °C, im Wesentlichen farbstabil sind. Somit weisen die anorganischen Pigmente vorzugsweise eine Farbstabilität oberhalb von 850 °C auf, insbesondere von 850 bis 1050 °C, vorzugsweise von 900 bis 930 °C. Das jeweils ausgewählte Pigment wird entsprechend der einen oder mehreren Schichten eines Metalloxids oder eines Metalloxidgemisches im Dentingerüstbereich vorzugsweise ausgewählt aus Oxiden, Oxidhydraten, Sulfiden, Sulfaten, Carbonaten und Silicaten der Übergangsmetalle, wie vorzugsweise Pigmente umfassend Zirkon und/oder Eisen. Bekannte Pigmente, umfassen Zirkonsilikate, Eisensilikate, Eisenoxide, Manganoxide, Chromoxide, _{Y}-Fe₂O3, Fe₃O₄/Fe₂O₃, Cr₂O₃, TiO₂. Ferner können die anorganischen Pigmente umfassen Buntpigmente, Glanzpigmente, Metalleffekt-Pigmente, insbesondere Glanzpigmente mit Blättchen- oder schuppenförmigen Metallteilchen, wie Eisenoxidrot, Strontiumgelb, Aluminium- oder Silberbronzen, Perlglanzpigmente oder Goldbronze, Aluminiumbronze.

Besonders bevorzugte anorganische, farbige Pigmente umfassen Eisenoxide, Zirkon-Praseodymsilikat (Zr,Pr)SiO₄ (CAS-Nr.: 68187-15-5),_ Zirkon-Eisensilikat (Zr, Fe(SiO₄)), (CAS-No: 68412-79-3), Zink-Eisen-Chrom-Braun-Spinell (Zn,Fe)(Fe,Cr)₂O₄, (CAS-Nr.: 68186-88-9), Zink-Eisen-Chrom-Braun-Spinell (Zn,Fe)(Fe,Cr)₂O₄, (CAS-Nr.: 68186-88-9), Chrom-Zinn-Rosa-Sphen CaO:SnO₂:SiO₂:Cr₂O₃, (CAS-Nr.: 68187-12-2).

Nach einer weiteren Ausführungsvariante können im Verfahren, im Rohling sowie im System zur Herstellung des Rohlings der (ii) Gerüstbereich und der Dentingerüstbereich eine geometrische Indexierung auf ihren inneren, sich gegenüberliegenden Oberflächen aufweisen, vorzugsweise um den Gerüstbereich und den Dentingerüstbereich in einer definierten Position verbindbar auszurüsten und optional können (iii) der Dentingerüstbereich und der äußere Bereich eine geometrische Indexierung auf ihren inneren, sich gegenüberliegenden Oberflächen aufweisen, vorzugsweise um den Dentingerüstbereich und den äußeren Bereich in einer definierten Position verbindbar auszurüsten. Die Indexierung entspricht vorzugsweise einer komplementären Struktur der sich gegenüberliegenden, inneren Oberflächen, komplementären Strukturierung der Oberfläche, wie beispielsweise mindestens einem Vorsprung, und mindestens einer komplementären Vertiefung.

Ferner ist es bevorzugt, wenn in dem Verfahren der (ii) Gerüstbereich und der Dentingerüstbereich formschlüssig, kraftschlüssig, stoffschlüssig oder entsprechend einer Kombination form- und/oder kraft- und/oder stoffschlüssig miteinander verbunden werden und/oder (iii) der Dentingerüstbereich und der äußere Bereich formschlüssig, kraftschlüssig, stoffschlüssig oder entsprechend einer Kombination form- und/oder kraft- und/oder stoffschlüssig miteinander verbunden werden.

Erfindungsgemäß wird ein offenporiges keramisches Gerüst, insbesondere ein gesintertes Gerüst mit mindestens einem Monomer optional mit Polymerisationsinitiator(en) infiltriert. Nach der Infiltration und Polymerisation zu Polymeren weist das keramische Gerüst verbesserte Materialeigenschaften auf. Der so hergestellte Werkstoff ist eine dentale Hybridkeramik. Die Infiltration des offenporigen keramischen Gerüstes kann in einem Bad umfassend das mindestens eine Monomer optional mit Polymerisationsinitiator(en) erfolgen. Nachfolgend kann die Polymerisation eines flüssigen infiltrierten Monomers oder einer Monomermischung erfolgen.

Gleichfalls Gegenstand der Erfindung ist ein System zur Herstellung eines dentalen Rohlings wobei das System einen erfindungsgemäßen Rohling und vorzugsweise ein Adhäsiv, einen plastischen oder flüssigen Hybridwerkstoff zur stoffschlüssigen Verbindung und/oder eine Implantatschraube umfasst.

Das jeweilige Lumen ist im Verbindungsteil, Dentingerüstbereich, äußeren Bereich oder im Rohling zur Aufnahme einer Verbindungsschraube ausgelegt, um die prothetische Versorgung mit einem Implantat oder einem Abutment auf einem Implantat festlegen zu können.

Entsprechend einer weiteren Alternative kann das System ein Adhäsiv, einen plastischen oder flüssigen Hybridwerkstoff zur stoffschlüssigen Verbindung und/oder eine Implantatschraube umfassen.

Nach einer weiteren Alternative ist Gegenstand der Erfindung die Verwendung eines Rohlings oder eines Systems zur Herstellung einer mehrfarbigen dentalen prothetischen Versorgung, insbesondere einer Implantat getragenen Einzelzahnversorgung, wie einer Krone, in einem Material abtragenden Verfahren.

Die Erfindung wird nachfolgend anhand der schematischen Figuren näher erläutert, ohne die Erfindung auf diese Ausführungsformen zu beschränken.

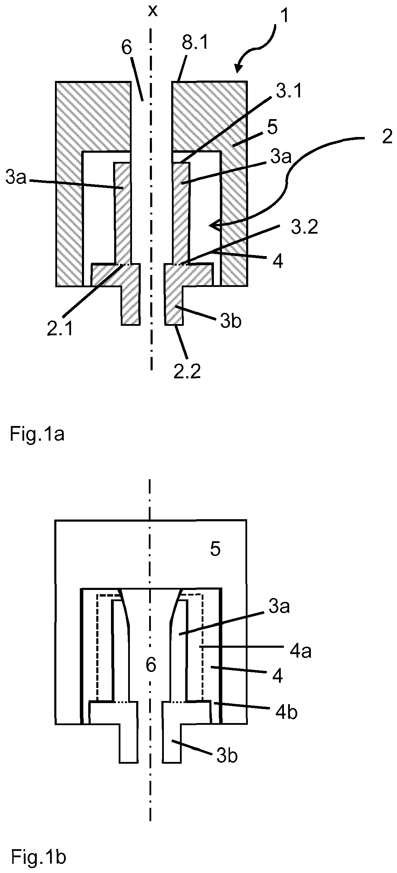

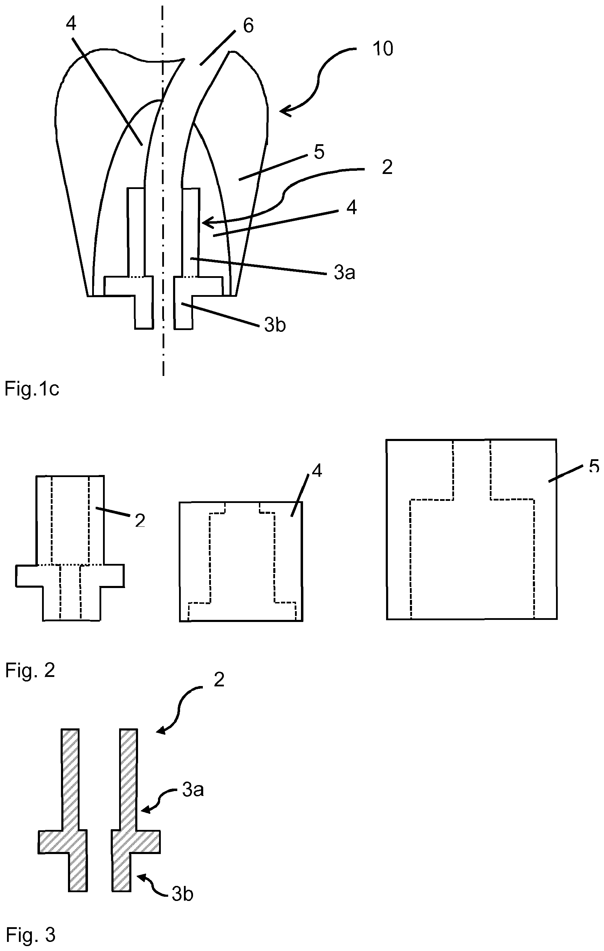

**Figur 1a** stellt dar einen erfindungsgemäßen Rohling 1 mit einem inneren Verbindungsteil **2,** siehe auch **Figur 3****,** das einen Gerüstbereich **3a** und eine Implantat-Anschlussgeometrie **3b** aufweist sowie einen Dentingerüstbereich **4** und einen äußeren Bereich **5.** Der äußere Bereich **5** wird in einem materialabtragenden Verfahren bearbeitet, so dass der Bereich die Kontur mindestens einer Zahnoberfläche einer Einzelzahnversorgung, wie einer Krone, annimmt. Das längliche, gerade Lumen **6** weist eine Längsachse **(x)** auf. Das Lumen reicht bis in den äußeren Bereich. Der Rohling weist in der Implantat-Anschlussgeometrie **3b** und im Gerüstbereich **3a** ein längliches Lumen **6** auf, das von der Oberseite **2.1** bis zur Unterseite **2.2** der Implantat-Anschlussgeometrie **3b** und von der Oberseite **3.1** bis zur Unterseite **3.2** des Gerüstbereiches **3a** reicht und eine Öffnung in krestaler Richtung und eine Öffnung in radikulärer Richtung aufweist. Ferner reicht das längliche Lumen **6** von der Oberseite **8.1** des äußeren Bereiches 5 bis zur Unterseite **2.2** der Implantat-Anschlussgeometrie **3b.**

In **Figur 1b** ist ein Rohling dargestellt, dessen Lumen **6** nicht in den äußeren Bereich **5** reicht. Das Lumen **6** kann im Dentingerüstbereich **4** und optional im Gerüstbereich **3a** nach krestal erweitert sein und im späteren Fräsprozess im äußeren Bereich gefräst werden. Zumindest im Bereich der Implantat-Anschlussgeometrie **3b** ist das Lumen vorzugsweise zylindrisch ausgebildet. In **Figur 1b** weist der Dentingerüstbereich **4** zwei Schichten **4a** und **4b** auf.

**Figur 1c** stellt dar einen bearbeiteten, erfindungsgemäßen Rohling mit einem inneren Verbindungsteil **2,** das einen Gerüstbereich **3a** und eine Implantat-Anschlussgeometrie **3b** aufweist sowie mit einem Dentingerüstbereich **4** und einem äußeren Bereich **5,** der in dem materialabtragenden Verfahren bearbeitet wurde und die Kontur mindestens einer Zahnoberfläche einer prothetischen Einzelzahnversorgung **10** annimmt. Das längliche Lumen **6** im Rohling ist im äußeren Bereich **5** nach lingual gebogen. Der Rohling der **Figur 1c** wies vor der Bearbeitung ein Lumen im Gerüstbereich auf. Das Lumen im Dentingerüstbereich und im äußeren Bereich **5** wurde im materialabtragenden Verfahren hergestellt, insbesondere gefräst.

Alternativ kann ein Rohling ein entsprechend nach lingual gebogenes, längliches Lumen aufweisen. In diesem Fall trägt der Rohling auf seiner Außenseite eine Referenz, um vor dem Bohren die linguale Seite der herzustellenden Prothese festzulegen.

**Figur 2** stellt dar ein erfindungsgemäßes System zur Herstellung eines dentalen Rohlings **1** umfassend die einzelnen miteinander verbindbaren Komponenten: inneres Verbindungsteil **2,** Dentingerüstbereich **4** und äußeren Bereich **5.**

Der erfindungsgemäße Rohling kann dann vorzugsweise mit deutlich geringerem Materialausschuss in einem automatisierten Fräsverfahren verwendet werden, da die Bruchfestigkeit und der E-Modul die Rohlinge deutlich besser die fräsende Bearbeitung ohne ein Abplatzen von Teilen des Rohlings während des Fräsvorgangs überstehen lässt.

## Patentansprüche

1. Dentaler Rohling (1) zur Herstellung einer dentalen prothetischen Versorgung (10) durch eine abtragende Bearbeitung, umfassend
(i) ein inneres Verbindungsteil (2), das in Richtung des koronalen Bereiches des dentalen Rohlings einen Gerüstbereich (3a) aufweist und in radikulärer Richtung des dentalen Rohlings eine Implantat-Anschlussgeometrie (3b) aufweist,
(ii) wobei der Gerüstbereich (3a) des Verbindungsteils (2) in Richtung des koronalen Bereiches des Rohlings (1) mit einem Dentingerüstbereich (4) verbunden ist, und
(iii) der Dentingerüstbereich (4) in Richtung des koronalen Bereiches des Rohlings (1) mit einem
(iv) äußeren Bereich (5) des Rohlings verbunden ist, und
(v) der dentale Rohling innen in der Implantat-Anschlussgeometrie (3b) des inneren Verbindungsteil (2) und optional im Gerüstbereich (3a) des inneren Verbindungsteils (2) ein längliches Lumen (6) aufweist, das von der Oberseite (2.1) bis zur Unterseite (2.2) der Implantat-Anschlussgeometrie (3b) des inneren Verbindungsteils (2) und optional von der Oberseite (3.1) bis zur Unterseite (3.2) des Gerüstbereiches (3a) reicht, und das Lumen eine Öffnung in krestaler oder lingualer Richtung und eine Öffnung in radikulärer Richtung aufweist, wobei der äußere Bereich (5) des Rohlings aus einer Hybridkeramik, insbesondere einer dentalen Hybridkeramik, gebildet ist, **dadurch gekennzeichnet, dass** die Hybridkeramik einen Keramikanteil umfasst, wobei der Keramikanteil ein keramisches Gerüst ist, wobei das keramische Gerüst von 50 bis 70 Gew.-% SiO₂, von 15 bis 30 Gew.-% Al₂O₃, von 5 bis 15 Gew.-% Na₂O, von 2 bis 10 Gew.-% K₂O, von 0,05 bis 5 Gew.-% B₂O₃, von 0,0001 bis 1 Gew.-% ZrO₂ und von 0,0001 bis 1 Gew.-% CaO umfasst, wobei die Gesamtzusammensetzung ad. 100 Gew.-% beträgt.

2. Rohling nach Anspruch 1, **dadurch gekennzeichnet, dass**
der dentale Rohling (1) ein längliches Lumen (6) aufweist, das von der Oberseite (8.1) des äußeren Bereiches (5) bis zur Unterseite (2.2) der Implantat-Anschlussgeometrie (3b) des Verbindungsteils (2) reicht, und das Lumen (6) durch das innere Verbindungsteil (2), den Dentingerüstbereich (4) und den äußeren Bereich (5) reicht und eine Öffnung in krestaler oder lingualer Richtung und eine Öffnung in radikulärer Richtung aufweist.

3. Rohling nach Anspruch 1 oder 2, **dadurch gekennzeichnet, dass** der dentale Rohling (1) ein längliches Lumen (6) aufweist, das von der Oberseite (8.1) des äußeren Bereiches (5) bis zur Unterseite (2.2) der Implantat-Anschlussgeometrie (3b) des Verbindungsteils (2) reicht, wobei das längliche Lumen (a) mindestens eine Längsachse aufweist, (b) das längliche Lumen abgewinkelt ist und mindestens zwei sich schneidende Längsachsen aufweist, (c) das längliche Lumen (6) bogenförmig ausgebildet ist und/oder (d) die Öffnung des länglichen Lumens in krestaler oder lingualer Richtung mindestens einen größeren Durchmesser aufweist als die Öffnung an der Unterseite (2.2) der Implantat-Anschlussgeometrie (3b) des inneren Verbindungsteils (2) in radikulärer Richtung.

4. Rohling nach einem der Ansprüche 1 bis 3, **dadurch gekennzeichnet, dass**
(i) das innere Verbindungsteil (2) umfassend den Gerüstbereich (3a) und die Implantat-Anschlussgeometrie (3b) aus mindestens einem Metall oder einer Metalllegierung ist.

5. Rohling nach einem der Ansprüche 1 bis 4, **dadurch gekennzeichnet, dass** (iii) der Dentingerüstbereich (4) aus einem Metalloxid oder Metalloxidgemisch gebildet ist, das optional einen Gehalt an Magnesiumoxid (MgO) und/oder Ytterbiumoxid (Y₂O₃) aufweist.

6. Rohling nach einem der Ansprüche 1 bis 5, **dadurch gekennzeichnet, dass** (iii) der Dentingerüstbereich (4) aus einem Metalloxid oder Metalloxidgemisch gebildet ist, und ausgewählt ist aus Zirkondioxid, Aluminiumoxid oder einem Zirkonoxid-/ Aluminiumoxid-Gemisch, wobei das Metalloxid oder Metalloxidgemisch optional einen Gehalt an Magnesiumoxid (MgO) und/oder Ytterbiumoxid (Y₂O₃) aufweist.

7. Rohling nach einem der Ansprüche 1 bis 6, **dadurch gekennzeichnet, dass** der (iv) äußere Bereich eine Hybridkeramik umfassend von 50 bis 98 Gew.-% eines keramischen Gerüstes aufweist sowie 2 bis 50 Gew.-% an Polymeranteil, wobei die Gesamtzusammensetzung der Hybridkeramik 100 Gew.-% beträgt.

8. Rohling nach einem der Ansprüche 1 bis 7, **dadurch gekennzeichnet, dass** (iv) der äußeren Bereich (5) des dentalen Rohlings (1) aus einer Hybridkeramik mit 2 bis 25 Gew.-% Polymeranteil und einem Keramikanteil, insbesondere einem porösen Keramikanteil, von 75 bis 98 Gew.-% in Bezug auf die Gesamtzusammensetzung der Hybridkeramik, gebildet ist, wobei die Hybridkeramik im Polymeranteil jeweils 0,0 bis 8,0 Gew.-% Pigmente enthält.

9. Rohling nach einem der Ansprüche 1 bis 8, **dadurch gekennzeichnet, dass** (iii) der Dentingerüstbereich (4) des Rohlings folgende Farbe entsprechend dem Farbraum L*a*b aufweist L 50 bis 80, a 2 bis 5 und b 15 bis 22, und/oder (iv) der äußeren Bereich (5) des Rohlings folgende Farbe entsprechend dem Farbraum L*a*b aufweist L 60 bis 95, a -5 bis 3 und b 3 bis 2.

10. Verfahren zur Herstellung eines dentalen Rohlings nach einem der Ansprüche 1 bis 9, wobei der Rohling hergestellt wird, indem
(i) ein inneres Verbindungsteil (2), das in Richtung des koronalen Bereiches des Rohlings einen Gerüstbereich (3a) und in radikulärer Richtung des Rohlings einer Implantat-Anschlussgeometrie (3b) aufweist, bereitgestellt wird, und
(ii) der Gerüstbereich (3a) des inneren Verbindungsteils (2) in Richtung des koronalen Bereiches des Rohlings (1) mit einem Dentingerüstbereich (4) verbunden wird, und
(iii) der Dentingerüstbereich (4) in Richtung des koronalen Bereiches des Rohlings (1) mit einem
(iv) äußeren Bereich (5) des Rohlings verbunden wird, und wobei
(v) der dentale Rohling innen in der Implantat-Anschlussgeometrie (3b) des inneren Verbindungsteils (2) und optional im Gerüstbereich (3a) des inneren Verbindungsteils (2) ein längliches Lumen (6) aufweist, und das Lumen von der Oberseite (2.1) bis zur Unterseite (2.2) der Implantat-Anschlussgeometrie (3b) des inneren Verbindungsteils (2) und optional von der Oberseite (3.1) bis zur Unterseite (3.2) des Gerüstbereiches (3a) des inneren Verbindungsteils (2) reicht, und das Lumen eine Öffnung in krestaler oder lingualer Richtung und eine Öffnung in radikulärer Richtung aufweist, wobei der äußere Bereich (5) des Rohlings aus einer Hybridkeramik, insbesondere einer dentalen Hybridkeramik, gebildet ist, wobei die Hybridkeramik einen Keramikanteil umfasst, wobei der Keramikanteil ein keramisches Gerüst ist, wobei das keramische Gerüst von 50 bis 70 Gew.-% SiO₂, von 15 bis 30 Gew.-% Al₂O₃, von 5 bis 15 Gew.-% Na₂O, von 2 bis 10 Gew.-% K₂O, von 0,05 bis 5 Gew.-% B₂O₃, von 0,0001 bis 1 Gew.-% ZrO₂ und von 0,0001 bis 1 Gew.-% CaO umfasst, wobei die Gesamtzusammensetzung ad. 100 Gew.-% beträgt.

11. Verfahren nach Anspruch 10, **dadurch gekennzeichnet, dass** der (ii) Gerüstbereich (3a) und der Dentingerüstbereich (4) eine geometrische Indexierung auf ihren inneren, sich gegenüberliegenden Oberflächen aufweisen, um den Gerüstbereich (3a) und den Dentingerüstbereich (4) in einer definierten Position verbindbar auszurüsten und optional (iii) der Dentingerüstbereich (4) und der äußere Bereich (5) eine geometrische Indexierung auf ihren inneren, sich gegenüberliegenden Oberflächen aufweisen, um den Dentingerüstbereich (4) und den äußeren Bereich (5) in einer definierten Position verbindbar auszurüsten.

12. Verfahren nach Anspruch 10 oder 11, **dadurch gekennzeichnet, dass** der (ii) Gerüstbereich (3a) und der Dentingerüstbereich (4) formschlüssig, kraftschlüssig und/oder stoffschlüssig miteinander verbindbar sind und/oder (iii) der Dentingerüstbereich (4) und der äußere Bereich (5) formschlüssig, kraftschlüssig und/oder stoffschlüssig miteinander verbindbar sind.

13. System zur Herstellung eines dentalen Rohlings nach einem der Ansprüche 1 bis 9, **dadurch gekennzeichnet, dass** das System
einen Rohling nach einem der Ansprüche 1 bis 9 und ein Adhäsiv, einen plastischen oder flüssigen Hybridwerkstoff zur stoffschlüssigen Verbindung und/oder eine Implantatschraube umfasst.

14. Verwendung eines Rohlings nach einem der Ansprüche 1 bis 9 oder eines Systems nach Anspruch 13 zur Herstellung einer mehrfarbigen dentalen prothetischen Versorgung (100) in einem Material abtragenden Verfahren.

## Claims

1. Dental blank (1) for producing a dental prosthetic restoration (10) by material-removing processing, comprising
(i) an inner connecting element (2) having a scaffold region (3a) in the direction of the coronal region of the dental blank and having an implant connection geometry (3b) in the radicular direction of the dental blank,
(ii) the scaffold region (3a) of the connecting element (2) being connected to a dentin scaffold region (4) in the direction of the coronal region of the blank (1), and
(iii) the dentin scaffold region (4) being connected to an
(iv) outer region (5) of the blank in the direction of the coronal region of the blank (1), and
(v) the dental blank having an elongated lumen (6) within the implant connection geometry (3b) of the inner connecting element (2) and, optionally, within the scaffold region (3a) of the inner connecting element (2), extending from the top side (2.1) to the bottom side (2.2) of the implant connection geometry (3b) of the inner connecting element (2) and, optionally, from the top side (3.1) to the bottom side (3.2) of the scaffold region (3a), and the lumen having an opening in crestal or lingual direction and an opening in radicular direction, the outer region (5) of the blank being made of a hybrid ceramic, in particular a dental hybrid ceramic, **characterised in that** the hybrid ceramic comprises a ceramic content, the ceramic content being a ceramic scaffold, the ceramic scaffold comprising from 50 to 70 % by weight SiO₂, from 15 to 30 % by weight Al₂O₃, from 5 to 15 % by weight Na₂O, from 2 to 10 % by weight K₂O, from 0.05 to 5 % by weight B₂O₃, from 0.0001 to 1 % by weight ZrO₂, and from 0.0001 to 1 % by weight CaO, the total composition amounting to ad. 100 % by weight.

2. Blank according to claim 1, **characterised in that**
the dental blank (1) comprises an elongated lumen (6) extending from the top side (8.1) of the outer region (5) to the bottom side (2.2) of the implant connection geometry (3b) of the connecting element (2), and the lumen (6) extends through the inner connecting element (2), the dentin scaffold region (4) and the outer region (5) and has an opening in crestal or lingual direction and an opening in radicular direction.

3. Blank according to claim 1 or 2, **characterised in that**
the dental blank (1) comprises an elongated lumen (6) extending from the top side (8.1) of the outer region (5) to the bottom side (2.2) of the implant connection geometry (3b) of the connecting element (2), the elongated lumen (a) having at least one longitudinal axis, (b) the elongated lumen being angled and having at least two intersecting longitudinal axes, (c) the elongated lumen (6) being arched and/or (d) the opening of the elongated lumen in crestal or lingual direction having at least a greater diameter than the opening at the bottom side (2.2) of the implant connection geometry (3b) of the inner connecting element (2) in radicular direction.

4. Blank according to any one of claims 1 to 3, **characterised in that** (i) the inner connecting element (2) comprising the scaffold region (3a) and the implant connection geometry (3b) is made of at least one metal or one metal alloy.

5. Blank according to any one of claims 1 to 4, **characterised in that** (iii) the dentin scaffold region (4) is made of a metal oxide or metal oxide mixture, optionally having a magnesium oxide (MgO) and/or ytterbium oxide (Y₂O₃) content.

6. Blank according to any one of claims 1 to 5, **characterised in that** (iii) the dentin scaffold region (4) is made of a metal oxide or metal oxide mixture, and is selected from zirconium dioxide, aluminum oxide or a zirconium oxide/aluminum oxide mixture, the metal oxide or metal oxide mixture optionally having a magnesium oxide (MgO) and/or ytterbium oxide (Y₂O₃) content.

7. Blank according to any one of claims 1 to 6, **characterised in that** (iv) the outer region has a hybrid ceramic comprising from 50 to 98 % by weight of a ceramic scaffold as well as 2 to 50 % by weight of polymer content, the total composition of the hybrid ceramic amounting to 100 % by weight.

8. Blank according to any one of claims 1 to 7, **characterised in that** the (iv) the outer region (5) of the dental blank (1) is made of a hybrid ceramic having 2 to 25 % by weight polymer content and a ceramic content, in particular a porous ceramic content, of 75 to 98 % by weight, based on the total composition of the hybrid ceramic, the hybrid ceramic respectively containing 0.0 to 8.0 % by weight pigments in the polymer content.

9. Blank according to any one of claims 1 to 8, **characterised in that**
(iii) the dentin scaffold region (4) of the blank has the following colour according to the L*a*b colour space L 50 to 80, a 2 to 5 and b 15 to 22, and/or
(iv) the outer region (5) of the blank has the following colour according to the L*a*b colour space L 60 to 95, a -5 to 3 and b 3 to 2.

10. Method for producing a dental blank according to any one of claims 1 to 9, the blank being produced by
(i) providing an inner connecting element (2) having a scaffold region (3a) in the direction of the coronal region of the blank and an implant connection geometry (3b) in the radicular direction of the blank, and
(ii) connecting the scaffold region (3a) of the inner connecting element (2) to a dentin scaffold region (4) in the direction of the coronal region of the blank (1), and
(iii) connecting the dentin scaffold region (4) to an
(iv) outer region (5) of the blank in the direction of the coronal region of the blank (1), and
(v) the dental blank having an elongated lumen (6) within the implant connection geometry (3b) of the inner connecting element (2) and, optionally, within the scaffold region (3a) of the inner connecting element (2), and the lumen extending from the top side (2.1) to the bottom side (2.2) of the implant connection geometry (3b) of the inner connecting element (2) and, optionally, from the top side (3.1) to the bottom side (3.2) of the scaffold region (3a) of the inner connecting element (2), and the lumen having an opening in crestal or lingual direction and an opening in radicular direction, the outer region (5) of the blank being made of a hybrid ceramic, in particular a dental hybrid ceramic, the hybrid ceramic comprising a ceramic content, the ceramic content being a ceramic scaffold, the ceramic scaffold comprising from 50 to 70 % by weight SiO₂, from 15 to 30 % by weight Al₂O₃, from 5 to 15 % by weight Na₂O, from 2 to 10 % by weight K₂O, from 0.05 to 5 % by weight B₂O₃, from 0.0001 to 1 % by weight ZrO₂, and from 0.0001 to 1 % by weight CaO, the total composition amounting to ad. 100 % by weight.

11. Method according to claim 10, **characterised in that** the (ii) scaffold region (3a) and the dentin scaffold region (4) have a geometric indexing on their opposite inner surfaces in order to make the scaffold region (3a) and the dentin scaffold region (4) connectable in a defined position and, optionally, (iii) the dentin scaffold region (4) and the outer region (5) have a geometric indexing on their opposite inner surfaces in order to make the dentin scaffold region (4) and the outer region (5) connectable in a defined position.

12. Method according to claims 10 or 11 **characterised in that** the
(ii) scaffold region (3a) and the dentin scaffold region (4) are connectable to each other in a positive locking, force-fitted and/or firmly bonded manner and/or (iii) the dentin scaffold region (4) and the outer region (5) are connectable to each other in a positive locking, force-fitted and/or firmly bonded manner.

13. System for producing a dental blank according to any one of claims 1 to 9, **characterised in that** the system
comprises a blank according to any one of claims 1 to 9 and an adhesive, a plastic or liquid hybrid material for firmly bonded connection and/or an implant screw.

14. Use of a blank according to any one of claims 1 to 9 or of a system according to claim 13 for producing a multi-coloured dental prosthetic restoration (100) in a material-removing process.

## Revendications

1. L'ébauche dentaire (1) pour produire une restauration prothétique dentaire (10) par un traitement à enlever du matériau, comprenant
(i) un élément de connexion intérieure (2) ayant une région de charpente (3a) dans la direction de la région coronale de l'ébauche dentaire et ayant une géométrie de raccordement d'implant (3b) dans la direction radiculaire de l'ébauche dentaire,
(ii) la région de charpente (3a) de l'élément de connexion (2) étant connectée à une région de charpente dentine (4) dans la direction de la région coronale de l'ébauche (1), et
(iii) la région de charpente dentine (4) étant connectée à une
(iv) région extérieure (5) de l'ébauche dans la direction de la région coronale de l'ébauche (1), et
(v) l'ébauche dentaire ayant un lumen élongé (6) à l'intérieur de la géométrie de raccordement d'implant (3b) de l'élément de connexion intérieure (2) et, facultativement, à l'intérieur de la région de charpente (3a) de l'élément de connexion intérieure (2), étendant à partir du côté supérieur (2.1) au côté inférieur (2.2) de la géométrie de raccordement d'implant (3b) de l'élément de connexion intérieure (2) et, facultativement, à partir du côté supérieur (3.1) au côté inférieur (3.2) de la région de charpente (3a), et le lumen ayant une ouverture dans la direction crestale ou linguale et une ouverture dans la direction radiculaire, la région extérieure (5) de l'ébauche étant faite d'une céramique hybride, en particulier une céramique hybride dentaire, **caractérisée en ce que** la céramique hybride comprend une teneur céramique, la teneur céramique étant une charpente céramique, la charpente céramique comprenant de 50 à 70 % en poids SiO₂, de 15 à 30 % en poids Al₂O₃, de 5 à 15 % en poids Na₂O, de 2 à 10 % en poids K₂O, de 0,05 à 5 % en poids B₂O₃, de 0,0001 à 1 % en poids ZrO₂, et de 0,0001 à 1 % en poids CaO, la composition totale montant à ad. 100 % en poids.

2. Ébauche selon la revendication 1, **caractérisée en ce que**
l'ébauche dentaire (1) comprend un lumen élongé (6) étendant à partir du côté supérieur (8.1) de la région extérieure (5) au côté inférieur (2.2) de la géométrie de raccordement d'implant (3b) de l'élément de connexion (2), et le lumen (6) étend à travers de l'élément de connexion intérieure (2), la région de charpente dentine (4) et la région extérieure (5) et a une ouverture dans la direction crestale ou linguale et une ouverture dans la direction radiculaire.

3. Ébauche selon la revendication 1 ou 2, **caractérisée en ce que** l'ébauche dentaire (1) comprend un lumen élongé (6) étendant à partir du côté supérieur (8.1) de la région extérieure (5) au côté inférieur (2.2) de la géométrie de raccordement d'implant (3b) de l'élément de connexion (2), le lumen élongé (a) ayant au moins un axe longitudinal, (b) le lumen élongé étant angulaire et ayant au moins deux axes longitudinaux d'intersection, (c) le lumen élongé (6) étant arqué et/ou (d) l'ouverture du lumen élongé dans la direction crestale ou linguale ayant au moins un diamètre plus grand que l'ouverture au côté inférieur (2.2) de la géométrie de raccordement d'implant (3b) de l'élément de connexion (2) dans la direction radiculaire.

4. Ébauche selon l'une des revendications 1 à 3, **caractérisée en ce que** (i) l'élément de connexion intérieure (2) comprenant la région de charpente (3a) et la géométrie de raccordement d'implant (3b) est faite d'au moins un métal ou un alliage métallique.

5. Ébauche selon l'une des revendications 1 à 4, **caractérisée en ce que** (iii) la région de charpente dentine (4) est faite d'un oxyde métallique ou d'un mélange d'oxyde métallique, facultativement ayant une teneur d'oxyde de magnésium (MgO) et/ou d'oxyde d'ytterbium (Y₂O₃).

6. Ébauche selon l'une des revendications 1 à 5, **caractérisée en ce que** (iii) la région de charpente dentine (4) est faite d'un oxyde métallique ou d'un mélange d'oxyde métallique, et est sélectionnée du dioxyde de zirconium, de l'oxyde d'aluminium ou d'un mélange de l'oxyde de zirconium/l'oxyde d'aluminium, l'oxyde métallique ou le mélange d'oxyde métallique facultativement ayant une teneur d'oxyde de magnésium (MgO) et/ou d'oxyde d'ytterbium (Y₂O₃).

7. Ébauche selon l'une des revendications 1 à 6, **caractérisée en ce que** la (iv) région extérieure a une céramique hybride comprenant de 50 à 98 % en poids d'une charpente céramique ainsi que 2 à 50 % en poids d'une teneur polymère, la composition totale de la céramique hybride montant à 100 % en poids.

8. Ébauche selon l'une des revendications 1 à 7, **caractérisée en ce que** (iv) la région extérieure (5) de l'ébauche dentaire est faite d'une céramique hybride ayant 2 à 25 % en poids d'une teneur polymère et une teneur céramique, en particulier une teneur céramique poreuse, de 75 à 98 % en poids, basée sur la composition totale de la céramique hybride, la céramique hybride contenant respectivement 0,0 à 8,0 % en poids des pigments dans la teneur polymère.

9. Ébauche selon l'une des revendications 1 à 8, **caractérisée en ce que** (iii) la région de charpente dentine (4) de l'ébauche a la couleur suivantes selon l'espace de couleurs L*a*b L 50 à 80, a 2à 5 et b 15 à 22, et/ou (iv) la région extérieure (5) de l'ébauche a la couleur suivantes selon l'espace de couleurs L*a*b L 60 à 95, a -5 à 3 et b 3 à 2.

10. Procédé pour produire une ébauche dentaire selon l'une des revendications 1 à 9, l'ébauche étant produite en
(i) fournir un élément de connexion intérieure (2) ayant une région de charpente (3a) dans la direction de la région coronale de l'ébauche et une géométrie de raccordement d'implant (3b) dans la direction radiculaire de l'ébauche, et
(ii) connecter la région de charpente (3a) de l'élément de connexion intérieure (2) à une région de charpente dentine (4) dans la direction de la région coronale de l'ébauche (1), et
(iii) connecter la région de charpente dentine (4) à une
(iv) région extérieure (5) de l'ébauche dans la direction de la région coronale de l'ébauche (1), et
(v) l'ébauche dentaire ayant un lumen élongé (6) à l'intérieur de la géométrie de raccordement d'implant (3b) de l'élément de connexion intérieure (2) et, facultativement, à l'intérieur de la région de charpente (3a) de l'élément de connexion intérieure (2), et le lumen étendant à partir du côté supérieur (2.1) au côté inférieur (2.2) de la géométrie de raccordement d'implant (3b) de l'élément de connexion intérieure (2) et, facultativement, à partir du côté supérieur (3.1) au côté inférieur (3.2) de la région de charpente (3a) de l'élément de connexion intérieure (2), et le lumen ayant une ouverture dans la direction crestale ou linguale et une ouverture dans la direction radiculaire, la région extérieure (5) de l'ébauche étant faite d'une céramique hybride, en particulier une céramique hybride dentaire, la céramique hybride comprenant une teneur céramique, la teneur céramique étant une charpente céramique, la charpente céramique comprenant de 50 à 70 % en poids SiO₂, de 15 à 30 % en poids Al₂O₃, de 5 à 15 % en poids Na₂O, de 2 à 10 % en poids K₂O, de 0,05 à 5 % en poids B₂O₃, de 0,0001 à 1 % en poids ZrO₂, et de 0,0001 à 1 % en poids CaO, la composition totale montant à ad. 100 % en poids.

11. Procédé selon la revendication 10, **caractérisé en ce que** la (ii) région de charpente (3a) et la région de charpente dentine (4) ont une indexation géométrique sur leurs surfaces intérieures opposées afin de faire la région de charpente (3a) et la région de charpente dentine (4) connectables dans une position définie et, facultativement, (iii) la région de charpente dentine (4) et la région extérieure (5) ont une indexation géométrique sur leurs surfaces intérieures opposées afin de faire la région de charpente dentine (4) et la région extérieure (5) connectables dans une position définie.

12. Procédé selon la revendication 10 ou 11, **caractérisé en ce que** (ii) la région de charpente (3a) et la région de charpente dentine (4) sont connectables l'une à l'autre d'une manière de forme, de force et/ou de matériau et/ou (iii) la région de charpente dentine (4) et la région extérieure (5) sont connectables l'une à l'autres d'une manière de forme, de force et/ou de matériau.

13. Système pour produire une ébauche dentaire selon l'une des revendications 1 à 9, **caractérisé en ce que** le système
comprend une ébauche selon l'une des revendications 1 à 9 et un adhésif, un matériau hybride plastique ou liquide pour une liaison de matière et/ou un vis d'implant.

14. Utilisation d'une ébauche selon l'une des revendications 1 à 9 ou d'un système selon la revendication 13 pour produire une restauration prothétique dentaire multicolore (100) dans un procédé à enlever du matériau.
